# EUROPÄISCHE PATENTSCHRIFT

(11) **EP 2 282 179 B1**
(45) Veröffentlichungstag und Bekanntmachung des Hinweises auf die Patenterteilung: **26.09.2012**
(21) Anmeldenummer: 10189476.4
(22) Anmeldetag: 12.03.2009
(51) Int. Cl.: G01F 1/684, G01F 1/69

(54) **Verfahren zur Herstellung eines Temperatursensors**
Method for manufacturing a temperature sensor
Procédé de fabrication d'une sonde de température

(30) Priorität: 20.03.2008 DE 102008015359
(43) Veröffentlichungstag der Anmeldung: 09.02.2011
(62) Teilanmeldung aus: 09722216.0
(73) Patentinhaber: Endress + Hauser Flowtec AG, 4153 Reinach (CH)
(72) Erfinder: Boguhn, Dirk, 81245, München (DE); Holoubek, Jiri, 9630, Wattwil (CH); Pfau, Axel, 4144, Arlesheim (CH); Polak, Jiri, 9652, Neu St. Johann (CH); Popp, Oliver, 4104, Oberwil (CH)
(74) Vertreter: Andres, Angelika Maria

(56) Entgegenhaltungen:
- DE-A1- 3 841 135
- DE-B- 1 033 940
- DE-U1- 8 626 547
- DE-U1- 9 406 603
- FR-A- 1 238 716
- US-B2- 7 197 953

## Beschreibung

Die vorliegende Erfindung betrifft eine Thermisches Durchflussmessgerät zur Bestimmung und/oder Überwachung des Durchflusses eines Messmediums durch ein Messrohr mit einer ersten Stifthülse und mindestens einer zweiten Stifthülse, einem ersten Widerstandsthermometer und mindestens einem zweiten Widerstandsthermometer, wobei mindestens der erste Widerstandsthermometer beheizbar ausgestaltet ist, welche Widerstandsthermometer jeweils eine erste Oberfläche und mindestens eine der ersten Oberfläche gegenüberliegende zweite Oberfläche aufweisen, welche erste Stifthülse den ersten Widerstandsthermometer umgibt und welche zweite Stifthülse den zweiten Widerstandsthermometer umgibt.

Herkömmliche thermische Durchflussmessgeräte verwenden üblicherweise zwei möglichst gleichartig ausgestaltete Temperatursensoren, die in, meist stiftförmigen, Metallhülsen, sog. Stingers, angeordnet sind und die in thermischem Kontakt mit dem durch ein Messrohr oder durch die Rohrleitung strömenden Medium sind. Für die industrielle Anwendung sind beide Temperatursensoren üblicherweise in ein Messrohr eingebaut; die Temperatursensoren können aber auch direkt in der Rohrleitung montiert sein. Einer der beiden Temperatursensoren ist ein sog. aktiver Temperatursensor, der mittels einer Heizeinheit beheizt wird. Als Heizeinheit ist entweder eine zusätzliche Widerstandsheizung vorgesehen, oder bei dem Temperatursensor selbst handelt es sich um ein Widerstandselement, z.B. um einen RTD-(Resistance Temperature Device) Sensor, der durch Umsetzung einer elektrischen Leistung, z.B. durch eine entsprechende Variation des Messstroms erwärmt wird. Bei dem zweiten Temperatursensor handelt es sich um einen sog. passiven Temperatursensor: Er misst die Temperatur des Mediums.

Üblicherweise wird in einem thermischen Durchflussmessgerät der beheizbare Temperatursensor so beheizt, dass sich eine feste Temperaturdifferenz zwischen den beiden Temperatursensoren einstellt. Alternativ ist es auch bekannt geworden, über eine Regel-/Steuereinheit eine konstante Heizleistung einzuspeisen.

Tritt in dem Messrohr kein Durchfluss auf, so wird eine zeitlich konstante Wärmemenge zur Aufrechterhaltung der vorgegebenen Temperaturdifferenz benötigt. Ist hingegen das zu messende Medium in Bewegung, ist die Abkühlung des beheizten Temperatursensors wesentlich von dem Massedurchfluss des vorbeiströmenden Mediums abhängig. Da das Medium kälter ist als der beheizte Temperatursensor, wird durch das vorbeiströmende Medium Wärme von dem beheizten Temperatursensor abtransportiert. Um also bei einem strömenden Medium die feste Temperaturdifferenz zwischen den beiden Temperatursensoren aufrecht zu erhalten, ist eine erhöhte Heizleistung für den beheizten Temperatursensor erforderlich. Die erhöhte Heizleistung ist ein Maß für den Massedurchfluss bzw. den Massestrom des Mediums durch die Rohrleitung.

Wird hingegen eine konstante Heizleistung eingespeist, so verringert sich infolge des Durchflusses des Mediums die Temperaturdifferenz zwischen den beiden Temperatursensoren. Die jeweilige Temperaturdifferenz ist dann ein Maß für den Massedurchfluss des Mediums durch die Rohrleitung bzw. durch das Messrohr.

Es besteht somit ein funktionaler Zusammenhang zwischen der zum Beheizen des Temperatursensors notwendigen Heizenergie und dem Massedurchfluss durch eine Rohrleitung bzw. durch ein Messrohr. Die Abhängigkeit des sog. Wärmeübertragungskoeffizienten von dem Massedurchfluss des Mediums durch das Messrohr bzw. durch die Rohrleitung wird in thermischen Durchflussmessgeräten zur Bestimmung des Massedurchflusses genutzt. Geräte, die auf diesem Prinzip beruhen, werden von der Anmelderin unter der Bezeichnung ,t-switch', ,t-trend' oder't-mass' angeboten und vertrieben.

Bisher wurden hauptsächlich RTD-Elemente mit wendelförmig gewickelten Platindrähten in thermischen Durchflussmessgeräten eingesetzt. Bei Dünnfilm-Widerstandsthermometern (TFRTDs) wird herkömmlicherweise eine mäanderförmige Platinschicht auf ein Substrat aufgedampft. Darüber wird eine weitere Glasschicht zum Schutz des Platinschicht aufgebracht. Der Querschnitt der Dünnfilm-Widerstandsthermometern ist im Unterschied zu den, einen runden Querschnitt aufweisenden RTD-Elementen, rechteckig. Die Wärmeübertragung in das Widerstandselement und/oder aus dem Widerstandselement erfolgt demnach über zwei gegenüberliegende Oberflächen, welche zusammen einen Großteil der Gesamtoberfläche eines Dünnfilm-Widerstandsthermometers ausmachen.

Thermische Durchflussmessgeräte und Verfahren zu deren Herstellung sind auch aus der FR 1 238 716 A, der DE 10 33 90 B, der DE 86 26 547 U1, der DE 38 41 135 A1 und der DE 94 06 603 U1 bekannt geworden.

Der Einbau eines quaderförmigen Dünnfilm-Widerstandsthermometers in eine runde Stifthülse wird in der US-PS 6,971,274 und der US-PS 7,197,953 folgendermaßen gelöst. In eine Distanzbuchse aus Metall mit einer rechteckigen Vertiefung wird der Dünnfilm-Widerstandsthermometer so eingesetzt, dass zumindest die zwei gegenüberliegenden großen Oberflächen des Dünnfilm-Widerstandsthermometers quasi spaltfreien Kontakt zu den ihnen gegenüberliegenden Oberflächen der Distanzbuchse haben. Die Distanzbuchse weist dazu eine rechteckige Vertiefung auf, welche entsprechend der Außenmaße des Dünnfilm-Widerstandsthermometers gefertigt ist. Die Distanzbuchse soll den Dünnfilm-Widerstandsthermometer eng haften. Dazu bilden Distanzbuchse und Dünnfilm-Widerstandsthermometer quasi eine Presspassung. Die Distanzbuchse selbst und die Stifthülse bilden ebenfalls eine Presspassung. Dadurch wird der Einsatz einer Vergussmasse oder eines anders gearteten Füllmaterials überflüssig. Der Vorteil dieses Aufbaus besteht in einer allseitigen guten Wärmekopplung zwischen Dünnfilm-Widerstandsthermometer und Messmedium durch die Distanzbuchse. Allerdings entstehen durch den festen Sitz des Dünnfifm-Widerstandsthermometers und/oder durch unterschiedliche Wärmeausdehnungskoeffizienten der beteiligten Materialen mechanische Spannungen im Dünnfilm-Widerstandsthermometer.

Die Aufgabe der Erfindung besteht darin, mit einem geringen Energieaufwand die Temperatur und/oder den Durchfluss eines Messmediums hochgenau zu messen.

Die Aufgabe wird gelöst durch ein Verfahren zur Herstellung eines Temperatursensors, insbesondere zur Verwendung in einem thermischen Durchflussmessgerät, mit mindestens einer rohrförmigen Stifthülse mit einem ersten offenen Ende, welches erste offene Ende der Stifthülse in einem Sensorhalter gehaltert wird, und einem zweiten Ende, mindestens einem Widerstandsthermometer mit mindestens einer ersten Oberfläche und mindestens einer der ersten Oberfläche gegenüberliegenden zweite Oberfläche, und mit Füllmaterial, welches durch das erste offene Ende der Stifthülse einfüllbar ist, wobei das zweite Ende der Stifthütse offen ist und in weiches zweite offene Ende der Stifthülse ein Distanzstück mit einem, an seiner ersten Oberfläche darauf befestigten, Widerstandsthermometer eingesetzt wird und das zweite offene Ende der Stifthülse mit einem Stopfen verschlossen wird. Das Verschließen des zweiten offenen Endes der Stifthülse erfolgt nachdem das Distanzstück mit aufgebrachtem Widerstandsthermometer in die Stifthülse eingebracht wurde, und die Kabel zur Kontaktierung des Widerstandsthermometers aus dem ersten offenen Ende herausgeführt wurden.

Das dichte Verschließen erfolgt bevorzugt durch eine Verschweißung des Stopfens mit der Stifthülse. Die Passung Stopfen Stifthülse ist dann bevorzugt eine Spielpassung.

Eine vorteilhafte Ausführungsform des erfindungsgemäßen Verfahrens besteht darin, dass das Füllmaterial bei geschlossenem zweitem Ende der Stifthülse durch das erste Ende der Stifthülse eingefüllt wird und die zweite Oberfläche des Widerstandsthermometers zumindest teilweise bedeckt.

Gemäß einer weiteren vorteilhaften Weiterbildung des erfindungsgemäßen Verfahrens wird das Distanzstück mit dem Stopfen stoffschlüssig verbunden. Dies geschieht vorzugsweise vor dem Aufbringen des Widerstandsthermometers und vor dem Einsetzen in die Stifthülse.

Eine weitere sehr vorteilhafte Weiterbildung des erfindungsgemäßen Verfahrens ist, dass das Distanzstück beim Einführen des Stopfens in die Stifthülse eingeschoben wird, wobei Distanzstück und Stifthülse bevorzugt eine Presspassung bilden, Eine Ausgestaltung sieht vor, dass der Stopfen durch ein Abschlussblech ersetzt wird, welches an das zweite Ende der Stifthülse angebracht wird und dieses dicht abschließt.

Durch das erfindungsgemäße Verfahren sind die axiale Lage des Widerstandsthermometers in der Stifthüise und die radiale Orientierung des Widerstandsthermometers in der Stifthülse bestimmt.

Die Erfindung wird anhand der nachfolgenden Figuren näher erläutert.

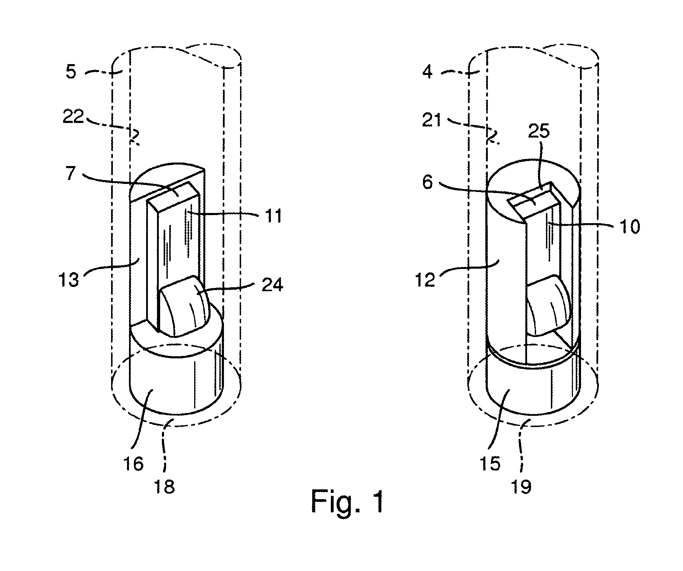

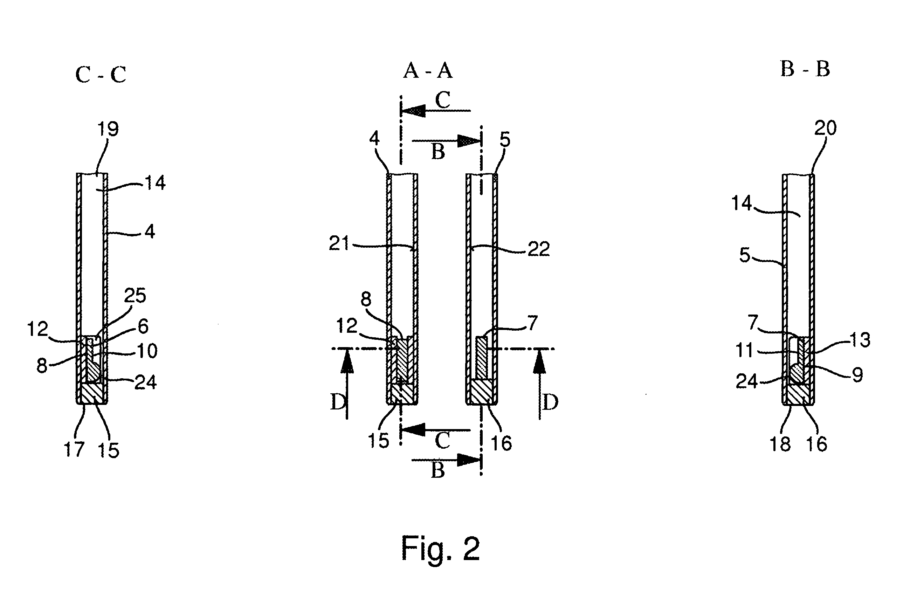

- Fig. 1: zeigt perspektivisch zwei unterschiedlich ausgestaltete Stifthülsen eines thermischen Massenstrommessers.

In Fig. 1 ist die perspektivische Darstellung eines thermischen Massenstrommessers 1 mit einem als Sfifthüise 5 ausgebildeten Sensorrohr mit einem ersten Ende 18, welches im Betriebszustand das Messmedium 3 berührt, gezeigt. Das zweite Ende 20 der Stifthülse 5, welches in einem Gehäuse bzw. einem Sensorhalter 23 befestigt ist, ist aus Gründen der Übersichtlichkeit nicht dargestellt.

Der Stopfen 16 ist an der Stirnseite der Stifthülse 5, also an ihrem zweiten Ende 20, mit ihr verschweißt. Stopfen 16 und Distanzstück 13 bilden hier ein einteiliges, monolithisches Bauteil. Das Distanzstück 13 steht in engem Kontakt zur Innenseite 22 der Stifthülse 5. Ein Widerstandsthermometer 7 ist auf das Distanzstück 13 gelötet. Die erste Oberfläche 9 des Widerstandsthermometers 7 steht somit in engem Kontakt mit dem Distanzstück 13. Dadurch ist eine gute Wärmeleitung vom Messmedium 3 bis zum Widerstandsthermometers 7 gewährleistet. Die zweite Oberfläche 11 des Widerstandsthermometers 7 steht frei im Raum, welcher durch die Stifthülse 5 begrenzt wird.

Das zweite Sensorrohr zeigt eine weitere Ausgestaltung des thermischen Durchflussmessgeräts. In eine Stifthülse 4 wurde durch ihr offenes zweites Ende 19 ein Distanzstück 12 eingeführt. Dieses bildet mit der Stifthülse 4 eine Presspassung. Das Distanzstück 12 wurde bei der Montage mittels eines Stopfens 15 in Richtung des nicht dargestellten ersten Endes der Stifthülse 4 vorgeschoben. Der Stopfen 15 selbst bildet mit der Stifthülse 4 eine Lospassung und ist an ihrem zweiten Ende 19 mit ihr mittels eines Laserschweißverfahrens verschweißt. Das Distanzstück 12 besteht aus einem gut wärmeleitenden Material. Es hat die Form eines Zylinders mit einer über die gesamte Zylinderhöhe, in der Längsachse verlaufende Nut 25 mit rechteckigem Querschnitt. Am "Boden" der Nut 25, also auf der Oberfläche der Nut 25, welcher keine weitere Oberfläche der Nut 25 gegenüberliegt, ist ein Widerstandsthermometer 6 angelötet. Die zweite Oberfläche 10 des Widerstandsthermometers 6 ist frei.

Der freie Raum in den Stifthülsen 4, 5 wird bevorzugt mit einem geeigneten, eine geringe Wärmeleitfähigkeit aufweisenden Füllmaterial 14 gefüllt bzw. vergossen. Dadurch wären die zweiten Oberflächen 10, 11 der Widerstandsthermometer 6, 7 mit Füllmaterial 14 bedeckt. Das Füllmaterial 14, wie auch eine Kontaktierung der Widerstandsthermometer 6, 7 mit Kabeln, insbesondere über die Zugentlastung 24, sind hier ebenfalls nicht dargestellt. Die Darstellung in Fig. 1 zeigt zwei verschiedene Ausgestaltungsmöglichkeiten der Erfindung. Der beheizbare Widerstandsthermometer ist nicht auf die gezeigte Variante beschränkt. Beide Widerstandsthermometer sind vertauschbar.

Die Distanzstücke 12, 13 weisen ebenfalls mindestens zwei Oberflächen auf. Die erste Oberfläche des Distanzstücks 12, 13, auf welcher die erste Oberfläche 8, 9 des Widerstandsthermometers 6, 7 angebracht wird, ist kongruent zu dieser ausgebildet. Erste Oberfläche 8, 9 des Widerstandsthermometers 6, 7 und erste Oberfläche des Distanzstücks 12, 13, auf weicher die erste Oberflächen 8, 9 des Widerstandsthermometers 6, 7 angebracht wird, bilden somit näherungsweise ein Positiv und ein Negativ. Gleichermaßen ist die zweite Oberfläche des Distanzstücks 12, 13 zur Innenseite 21, 22 der Stifthülse 4, 5 ein Negativ. ist also die Innenseite 21, 22 der Stifthülse 4, 5 rohrförmig, ist die zweite Oberfläche des Distanzstücks 12, 13 entsprechend gekrümmt. Sowohl die erste Oberfläche 8, 9 des Widerstandsthermometers 6, 7 und die erste Oberfläche des Distanzstücks 12, 13 stehen in engem Kontakt, als auch die zweite Oberfläche des Distanzstücks 12, 13 und die Innenseite 21, 22 der Stifthülse 4, 5 stehen in engem Kontakt.

Durch die Montage der Widerstandsthermometer 6, 7 durch das jeweilige zweite Ende 17, 18 der Stifthülse 4, 5 ist die Lage der Widerstandsthermometer 6, 7 in der Stifthülse 4, 5 zum Messmedium hin reproduzierbar.

Es wird vorzugsweise ein thermisches Durchflussmessgerät zur Bestimmung und/oder Überwachung des Durchflusses eines Messmediums durch ein Messrohr mit einer ersten Stifthülse und mindestens einer zweiten Stifthülse, einem ersten Widerstandsthermometer und mindestens einem zweiten Widerstandsthermometer vorgeschlagen, wobei mindestens der erste Widerstandsthermometer beheizbar ausgestaltet ist, welche Widerstandsthermometer jeweils eine erste Oberfläche und mindestens eine der ersten Oberfläche gegenüberliegende zweite Oberfläche aufweisen, welche erste Stifthülse den ersten Widerstandsthermometer umgibt und welche zweite Stifthülse den zweiten Widerstandsthermometer umgibt, und welche Stifthülsen mit einem Füllmaterial befüllbar sind, wobei jeweils mindestens ein Distanzstück zwischen der Stifthülse und der ersten Oberfläche des Widerstandsthermometers anbringbar ist und die zweite Oberfläche des Widerstandsthermometers zumindest teilweise von Füllmaterial bedeckt ist. Bei den Widerstandsthermometem handelt es sich bevorzugt um Dünnfilm-Widerstandsthermometer. Stifthülse und Distanzstück stehen dabei vorteilhaft in engem Kontakt. Ebenso steht jeweils die erste Oberfläche eines Widerstandsthermometers bevorzugt in engem Kontakt mit der ihr gegenüberliegenden Fläche des jeweiligen Distanzstücks.

Bei dem thermischen Durchflussmessgerät handelt es sich vorzugsweise um ein thermisches Massedurchflussmessgerät, welches auf dem Prinzip der thermischen Massenstrommessung den Durchfluss, insbesondere des Massedurchflusses, eines Messmediums durch ein Messrohr bestimmt und/oder überwacht. Die Stifthülse ist bevorzugt rohrförmig mit einem ersten Ende und einem zweiten Ende, welches erste Ende in einem Sensorhalter befestigbar ist, also welche Stifthülse an ihrem ersten Ende in einem Sensorhalter befestigbar ist. Somit berührt die Stifthülse im Betriebszustand das Messmedium zumindest mit ihrem zweiten Ende. Neben dem beheizten ersten Widerstandsfihermometer, verfügt das thermische Durchflussmessgerät über einen zweiten Widerstandsthermometer. Dieser ist zum Beispiel unbeheizt und stelle somit Information über die aktuelle Temperatur T₂ des Mediums bereit. Zur Bestimmung und/oder Überwachung des Durchflusses des Messmediums durch das Messrohr verfügt das Messsystern, in welches das thermische Durchflussmessgerät eingebettet ist, über eine Regel-/Auswerteeinheit, welche anhand der Temperaturdifferenz zwischen den beiden Temperatursensoren ΔT = T₁ - T₂ und/oder anhand Heizleistung, die dem beheizbaren Temperatursensor zugeführt wird, den Durchfluss, in diesem Beispiel den Massedurchfluss, des Messmediums durch das Messrohr bzw. die Rohrleitung bestimmt. Diese Regel-/Auswerteeinheit ist bevorzugt Teil des thermischen Durchflussmessgeräts selbst.

Die Widerstandsthermometer sind bevorzugt so genannte Dünnfilm-Widerstandsthermometer oder auch besser bekannt unter der englischen Bezeichnung thin-film resistance temperature device oder thin-film resistance temperature detector (TFRTD). Herkömmliche TFRTDs weisen einen näherungsweise rechteckigen Querschnitt auf. Diese quaderförmigen TFRTDs haben somit zwei sich gegenüberliegende große Oberflächen, über die hauptsächlich der Wärmeeintrag bzw. die Wärmeübertragung stattfindet. Gemäß einer vorteilhaften Weiterbildung des thermischen Durchflussmessgeräts weisen die Stifthülsen ein erstes Ende und ein zweites Ende auf, welche Stifthülsen an ihrem ersten Ende in einem Sensorhalter befestigbar sind und welches zweite Ende der Stifthülsen jeweils von dem Stopfen dicht abschließbar ist.

Der Stopfen kann dabei aus wärmeleitenden oder wärmeisolierendem Material bestehen, je nach Anwendung. Bevorzugt besteht er jedoch aus gut wärmeleitendem Material. Geeignet sind die Materialen, wie sie im Stand der Technik ausreichend beschrieben sind. Dazu zählen vor allem Kupfer und Kupferlegierungen.

Eine vorteilhafte Weiterbildung des thermischen Durchflussmessgeräts schlägt vor, dass das erste Ende der Stifthülsen offen ist und dass das zweite Ende der Stifthülsen offen ist und dass die Stifthülsen jeweils über ihr erstes offenes Ende mit Füllmaterial befüllbar sind und dass das Distanzstück jeweils durch das zweite offene Ende der Stifthülse in die Stifthülse einsetzbar ist. Die Stifthülse wird also vom zweiten Ende aus bestückt. Ihr erstes Ende kann dabei schon im Sensorhalter angebracht sein. Das Einführen des vormontierten Distanzstücks mit dem Widerstandsthermometer durch das zweite Ende der Stifthülse bietet folgenden Vorteil. Da der Widerstandsthermometer sehr nahe am zweiten Ende der Stifthülse angebracht wird, ist der Weg, den das Distanzstück mit dem darauf angebrachten Widerstandsthermometer in der Stifthülse zurücklegen muss, sehr kurz im Vergleich zu einer Standartbestückung durch das erste Ende. Dadurch ist die Lage des Widerstandsthermometers in der Stifthülse während der Montage festlegbar. Dazu wird zuerst das mit dem Widerstandsthermometer vormontierte Distanzstück in die Stifthülse eingepresst und anschließend der Stopfen nachgeschoben. Erst danach wird das Füllmaterial vom ersten Ende der Stifthülse aus eingefüllt.

Eine sehr vorteilhafte Weiterbildung des thermischen Durchflussmessgeräts ist darin zu sehen, dass das Widerstandsthermometer mit dem Distanzstück stoffschlüssig verbindbar ist.

In einer bevorzugten Ausgestaltung ist das Widerstandsthermometer mit seiner ersten Oberfläche an dem Distanzstück angelötet. In einer weiteren Variante wird das Widerstandsthermometer mit einer Klammer am Distanzstück festgehalten. Dies stellt natürlich keine stoffschlüssige Verbindung dar. In einer weiteren Variante wird das am Distanzstück angelötete Widerstandsthermometer zusätzlich mit einer Klammer am Distanzstück festgehalten. Dadurch wird eine Ablösung des Widerstandsthermometers vom Distanzstück durch eine zwischenzeitliche Lötverbindungsauflösung durch den Wärmeeintrag durch das Schweißen des Stopfens an die Stifthülse verhindert.

Eine weitere vorteilhafte Weiterbildung des thermischen Durchflussmessgeräts sieht vor, dass der Stopfen stoffschlüssig mit der Stifthülse verbindbar ist. Methoden den Stopfen mit der Stifthülse stoffschlüssig zu verbinden sind dem Fachmann ausreichend bekannt. Dazu zählen z.B. Schweißen, Kleben und Löten. Als besonders vorteilhaft ist Laserschweißen anzusehen. Durch den sehr begrenzten, schmalen Bereich des Wärmeeintrags durch das Schweißen in den Stopfen und/oder in die angrenzenden Bauteile, wie z.B. in das Distanzstück mit dem vormontierten Widerstandsthermometer, werden die Bauteile nur einer geringen thermischen und/oder daraus resultierenden mechanischen Beanspruchung durch das Schweißen ausgesetzt. Ist z.B. der Widerstandsthermometer auf das Distanzstück aufgelötet, erreicht die Temperatur der Lötverbindung beim Schweißen des Stopfens mit der Stifthülse, so haben Versuche gezeigt, bei einer entsprechenden konstruktiven Ausgestaltung der Bauteile, nicht die kritische Höhe, bei der die Lötverbindung Schaden nehmen würde. Gemäß einer Ausgestaltung wird der Stopfen also mittels eines Laserschweißverfahrens mit der Stifthülse stoffschlüssig verbunden.

Gemäß einer vorteilhaften Weiterbildung des thermischen Durchflussmessgeräts wird vorgeschlagen, dass das Distanzstück stoffschlüssig mit dem Stopfen verbindbar ist. Dabei kann der Stopfen aus dem gleichen Material gefertigt sein, wie das Distanzstück, oder der Stopfen ist integraler Bestandteil des Distanzstücks, oder aber die Materialen von Stopfen und Distanzstück unterscheiden sich.

Das Distanzstück besteht besonders vorteilhaft aus gut wärmeleitendem Material, z.B. aus Kupfer oder Kupferlegierungen. Herkömmlicherweise besteht die Stifthülse aus Edelstahl, z.B. aus Nickelbasislegierungen. Edelstahl weist gewöhnlich eine recht geringe Wärmeleitfähigkeit aus. So liegt die Wärmeleitfähigkeit von X2CrNiMo 17-12-3 oder auch 1.4404 bei 15W/(mK). Zum Vergleich liegt die Wärmeleitfähigkeit von reinem Kupfer bei ca. 400W/(mK).

Ist der Stopfen nun z.B. aus Kupfer und das Messmedium, weiches das thermische Durchflussmessgerät berührt, soll und/oder darf nicht mit Kupfer in Berührung kommen, ist zusätzlich noch ein Deckel zwischen Messmedium und Stopfen als Abschluss des zweiten Endes der Stifthülse anzubringen oder das blanke Kupfer ist mit einer Nickelschicht zu bedampfen. In einer anderen Variante besteht der Stopfen aus einem Edelstahl, insbesondere aus dem gleichen Werkstoff wie die Stifthülse. Damit bildet er den Abschluss des zweiten Endes der Stifthülse.

Eine vorteilhafte Weiterbildung des thermischen Durchflussmessgeräts besteht darin, dass das Distanzstück und die Stifthülse eine Presspassung eingehen. Distanzstück und Stifthülse sind so dimensioniert, dass die Passung zwischen Distanzstück und Stifthülse eine Presspassung ist. Im Gegensatz dazu geht der Stopfen mit der Stifthülse vorteilhaft eine Lospassung oder einen leichten Schiebesitz ein.

Einer weiteren vorteilhaften Weiterbildung folgend, ist das Distanzstück zylinderförmig, wobei es eine Nut, insbesondere mit trapezförmigem oder rechteckigem Querschnitt, insbesondere in Richtung seiner Längsachse aufweist. Anschaulich ist das Distanzstück eine Welle mit Passfedemut. Die Passfedemut kann dabei über die gesamte "Wellenlänge" verlaufen, also z.B. eine durch Räumen hergesteilte, durchgehende Nut sein. Diese Form hat insbesondere Vorteile in der Wärmeübertragung und sie erleichtert die Befestigung, insbesondere das Anlöten, des Widerstandsthermometers. Besonders vorteilhaft ist diese Form des Distanzstücks jedoch anzusehen in Bezug auf die Montage des Distanzstücks. Eine Presspassung zwischen Stifthülse und Distanzstück ist somit einfach realisierbar.

Das Füllmaterial, oder auch Vergussmasse genannt, besteht z.B. aus einem Pulver aus einem Material mit geringer Wärmeleitfähigkeit oder einer wärmeisolierenden Paste. Üblicherweise wird eine Silikonfüllung mit einer Wärmeleitfähigkeit von ca. 0,2 W/(mK) verwendet.

Dies hat sowohl beim unbeheizten Sensor, als auch beim beheizten Sensor Vorteile. Die erste Oberfläche des Widerstandsthermometers steht mit dem Messmedium über eine so genannte Wärmebrücke mit sehr guten Wärmeleitungseigenschaften in Kontakt, die gegenüberliegende zweite Oberfläche des Widerstandsthermometers jedoch ist gegen das Messmedium wärmeisoliert. Die Fläche, auf die eine Wärmeübertragung stattfindet bzw. von der eine Wärmeübertragung stattfindet ist genau definiert. Daraus ergibt sich eine Richtungsabhängigkeit des Temperatursensors. Er ist gegenüber der Anströmrichtung des Messmediums empfindlich. Zusätzlich dazu fallen beim beheizten Sensor, im Vergleich zum Stand der Technik, die Wärmeverluste in Richtung Sensorgehäuse deutlich niedriger aus.

Eine besonders vorteilhafte Ausgestaltung sieht vor, dass die ersten Oberflächen der Widerstandsthermometer senkrecht zur Hauptströmungsrichtung des Messmediums im Messrohr stehen, wobei jeweils die zweite Oberfläche der Widerstandsthermometer in Richtung der Strömung des Messmediums zeigen. Die Messrohrachse kennzeichnet dabei meist die Hauptströmungsrichtung des Messmediums im Messrohr. Die Distanzstücke befinden sich also jeweils auf den angeströmten Seiten der Widerstandsthermometer und die erste Oberfläche der Widerstandsthermometer zeigt entgegen der Hauptströmungsrichtung des Messmediums im Messrohr.

Durch den Aufbau des thermischen Durchflussmessgeräts ist die axiale Lage des Widerstandsthermometers bzw. des Distanzstücks mit aufgebrachtem Widerstandsthermometer in der Stifthülse bekannt und somit sehr gut reproduzierbar. Beide Achsen der Stifthülsen stehen bevorzugt senkrecht zur Strömung. Zusätzlich ist die Orientierung bzw. die Ausrichtung des Widerstandsthermometers in der Stifthülse einfach festlegbar und/oder bestimmbar.

### Bezugszeichenliste

- 1: Thermisches Durchflussmessgerät
- 2: Messrohr
- 3: Messmedium
- 4: Erste Stifthülse
- 5: Zweite Stifthülse
- 6: Erstes Widerstandsthermometer
- 7: Zweites Widerstandsthermometer
- 8: Erste Oberfläche des ersten Widerstandsthermometers
- 9: Erste Oberfläche des zweiten Widerstandsthermometers
- 10: Zweite Oberfläche des ersten Widerstandsthermometers
- 11: Zweite Oberfläche des zweiten Widerstandsthermometers
- 12: Distanzstück
- 13: Distanzstück
- 14: Füllmaterial
- 15: Stopfen
- 16: Stopfen
- 17: Erstes Ende der ersten Stifthülse
- 18: Erstes Ende der zweiten Stifthülse
- 19: Zweites Ende der ersten Stifthülse
- 20: Zweites Ende der zweiten Stifthülse
- 21: Innenseite der Stifthülse
- 22: Innenseite der Stifthülse
- 23: Sensorhalter
- 24: Zugentlastung
- 25: Nut

## Patentansprüche

1. Verfahren zur Herstellung eines Temperatursensors, insbesondere für ein thermisches Durchflussmessgerät, mit mindestens einer rohrförmigen Stifthülse (4, 5) mit einem ersten offenen Ende (17, 18) und einem zweiten Ende (19, 20), welches erste offene Ende (17, 18) der Stifthülse (4, 5) in einem Sensorhalter gehaltert wird, mindestens einem Widerstandsthermometer (6, 7) mit einer ersten Oberfläche (8, 9) und mindestens einer der ersten Oberfläche gegenüberliegenden zweiten Oberfläche (10, 11),
**dadurch gekennzeichnet,**
**dass** das zweite Ende (19, 20) der Stifthülse (4, 5) offen ist und durch welches zweite offene Ende (19, 20) der Stifthülse (4, 5) ein Distanzstück (12, 13) mit einem, an seiner ersten Oberfläche (8, 9) darauf befestigten, Widerstandsthermometer (6, 7) in die Stifthülse (4, 5) eingesetzt wird und das zweite offene Ende (19, 20) der Stifthülse (4, 5) mit einem Stopfen (15, 16) verschlossen wird.

2. Verfahren zur Herstellung eines Temperatursensors nach Anspruch 9,
**dadurch gekennzeichnet,**
**dass** Füllmaterial (14) bei geschlossenem zweiten Ende (19, 20) der Stifthülse (4, 5) durch das erste Ende (17, 18) der Stifthülse (4, 6) eingefüllt wird und die zweite Oberfläche (10, 11) des Widerstandsthermometers (6, 7) zumindest teilweise bedeckt.

3. Verfahren zur Herstellung eines Temperatursensors nach einem der Ansprüche 9 oder 10,
**dadurch gekennzeichnet,**
**dass** das Distanzstück (12, 13) mit dem Stopfen (15, 16) stoffschlüssig verbunden wird.

4. Verfahren zur Herstellung eines Temperatursensors nach einem der Ansprüche 9 bis 11,
**dadurch gekennzeichnet,**
**dass** das Distanzstück (12, 13) beim Einführen des Stopfens (15, 16) in die Stifthülse (4, 5) eingeschoben wird.

## Claims

1. Procedure to produce a temperature sensor, particularly for a thermal flowmeter, with at least one tubular casing (4, 5) with a first open end (17, 18) and a second end (19, 20), where the first open end (17, 18) of the casing (4, 5) is retained in a sensor holder; at least one resistance thermometer (6, 7) with a first surface (8, 9); and at least a second surface (10, 11) located opposite the first surface,
**characterized in that**
the second end (19, 20) of the casing (4, 5) is open and via said second open end (19, 20) of the casing (4, 5) a spacer (12, 13), with a resistance thermometer (6, 7) secured on its first surface (8, 9), is inserted into the casing (4, 5) and the second open end (19, 20) of the casing (4, 5) is sealed with a plug (15, 16).

2. Procedure to produce a temperature sensor as claimed in Claim 9,
**characterized in that**
in the case of the closed second end (19, 20) of the casing, the filling material (14) is filled by the first end (17, 18) of the casing (4, 5) and the second surface (10, 11) of the resistance thermometer (6, 7) is a least partially covered.

3. Procedure to produce a temperature sensor as claimed in one of the Claims 9 or 10,
**characterized in that**
the spacer (12, 13) is bonded with the plug (15, 16).

4. Procedure to produce a temperature sensor as claimed in one of the Claims 9 to 11,
**characterized in that**
the spacer (12, 13) is pushed into the casing (4, 5) when the plug (15, 16) is introduced.

## Revendications

1. Procédé destiné à la fabrication d'un capteur de température, notamment pour un débitmètre thermique, avec au moins une douille (4, 5) comportant une première extrémité (17, 18) ouverte et une deuxième extrémité (19, 20), laquelle première extrémité (17, 18) ouverte de la douille (4, 5) est maintenue dans un premier support de capteur, au minimum un thermomètre à résistance électrique (6, 7) avec une première surface (8, 9) et au moins une deuxième surface (10, 11) située à l'opposé de la première surface,
**caractérisé en ce**
**que** la deuxième extrémité (19, 20) de la douille (4, 5) est ouverte et à travers laquelle deuxième extrémité (19, 20) de la douille (4, 5) est introduite dans la douille (4, 5) une entretoise (12, 13) avec un thermomètre à résistance électrique (6, 7) fixé sur sa première surface (8, 9) et en ce que la deuxième extrémité (19, 20) ouverte de la douille (4, 5) est obturée au moyen d'un bouchon (15, 16).

2. Procédé destiné à la fabrication d'un capteur de température selon la revendication 9,
**caractérisé en ce**
**que** le matériau de remplissage (14) en cas de deuxième extrémité (19, 20) fermée de la douille (4, 5) est rempli par la première extrémité (17, 18) de la douille (4, 5) et que la deuxième surface (10, 11) du thermomètre à résistance électrique (6, 7) est recouverte au moins partiellement.

3. Procédé destiné à la fabrication d'un capteur de température selon l'une des revendications 9 ou 10,
**caractérisé en ce**
**que** l'entretoise (12, 13) est reliée par liaison de matière avec le bouchon (15, 16).

4. Procédé destiné à la fabrication d'un capteur de température selon l'une des revendications 9 à 11,
**caractérisé en ce**
**que** l'entretoise (12, 13) est pressée dans la douille (4, 5) lors de l'introduction du bouchon (15, 16).
